Europäisches Patentamt

(19) European Patent Office

Office européen des brevets

(11) Numéro de publication : **0 330 550 B1**

(12)                          **FASCICULE DE BREVET EUROPEEN**

(45) Date de publication du fascicule du brevet :    (51) Int. Cl.⁵ : **B64G 1/44**
16.10.91 Bulletin 91/42

(21) Numéro de dépôt : **89400434.0**

(22) Date de dépôt : **16.02.89**

(54) Système pour l'arrimage d'un ensemble articulé d'éléments sur un engin spatial.

(30) Priorité : 23.02.88 FR 8802147

(43) Date de publication de la demande :
30.08.89 Bulletin 89/35

(45) Mention de la délivrance du brevet :
16.10.91 Bulletin 91/42

(84) Etats contractants désignés :
DE ES GB IT NL SE

(56) Documents cités :
EP-A- 0 151 505
DE-A- 3 106 099
FR-A- 2 598 383

(73) Titulaire : AEROSPATIALE SOCIETE
NATIONALE INDUSTRIELLE Société
Anonyme dite:
37, Boulevard de Montmorency
F-75016 Paris (FR)

(72) Inventeur : Marello, Georges
520 rue Janvier Passero
F-06210 Mandelieu (FR)
Inventeur : Auternaud, Jacques
1238/5 Avenue Notre Dame de Vie
F-06250 Mougins (FR)

(74) Mandataire : Bonnetat, Christian et al
CABINET BONNETAT 23, Rue de Léningrad
F-75008 Paris (FR)

Jouve, 18, rue Saint-Denis, 75001 PARIS

## Description

La présente invention concerne un système pour l'arrimage d'un ensemble articulé d'éléments sur un engin spatial.

On sait que, sur les engins spatiaux, sont arrimés des ensembles articulés d'éléments, tels que panneaux de générateurs solaires, antennes, radiateurs thermiques, bras d'éloignement, etc...

Lors du lancement de l'engin spatial par une fusée porteuse, ces éléments, qui peuvent être des panneaux de plusieurs mètres carrés en matériau léger, doivent être étroitement repliés et appliqués contre ledit engin et doivent être maintenus dans cette position pendant toute la phase de lancement et de mise sur orbite.

Pour maintenir les éléments repliés, il faut des systèmes qui sur ordre, par exemple télécommandé depuis la Terre, libèrent et laissent se déplier lesdits éléments, sans interférer avec la cinématique de déploiement.

Du fait que ces éléments peuvent être plus grands que la structure de l'engin porteur, on utilise des systèmes d'arrimage comportant au moins un organe de retenue traversant chaque élément. Cependant, un tel organe de retenue traversant risque d'entrer en contact avec lesdits éléments au moment du déploiement et, éventuellement, de détériorer ceux-ci.

Pour éviter ces inconvénients, le brevet DE-A-3106099 décrit un système du type mentionné ci-dessus permettant de déplacer vers l'extérieur ledit organe de retenue, préalablement sectionné, de façon à le dégager desdits éléments repliés. Le système de ce brevet antérieur comporte, à cet effet, des moyens élastiques moteurs disposés entre l'élément externe de l'ensemble articulé et ledit organe de retenue. Dans la position repliée dudit ensemble d'éléments, lesdits moyens élastiques moteurs sont bandés, mais empêchés de se détendre grâce audit organe de retenue. En revanche, dès rupture de l'organe de retenue, lesdits moyens élastiques se détendent pour déplacer ledit organe de retenue et pour l'amener et le maintenir dans une position pour laquelle il dégage lesdits éléments (qui peuvent alors se déployer sans risque de contact avec ledit organe), mais dans laquelle lesdits moyens élastiques et ledit organe de retenue sont en saillie par rapport à la face extérieure dudit élément externe.

Il peut en résulter des inconvénients. En effet, lorsque, par exemple, lesdits éléments sont des panneaux équipés de cellules solaires, lesdits moyens élastiques et ledit organe de retenue en saillie portent une ombre sur lesdites cellules portées par la face extérieure dudit élément externe, de sorte que le générateur électrique associé à celles-ci ne peut présenter son rendement maximal.

La présente invention a pour objet de remédier à ces inconvénients.

A cette fin, selon l'invention, le système d'arrimage, en position repliée, d'un ensemble d'éléments articulés entre eux, ainsi que sur une structure, et pouvant prendre, soit ladite position repliée dans laquelle lesdits éléments sont superposés, soit une position déployée dans laquelle lesdits éléments sont au moins sensiblement alignés les uns au bout des autres, ledit système comportant :

— au moins un organe de retenue traversant lesdits éléments en position repliée dudit ensemble et relié d'un côté, à ladite structure et en appui, de l'autre, sur l'élément externe dudit ensemble ;

— des moyens pour rompre volontairement soit ledit organe de retenue, soit sa liaison à ladite structure, lorsque l'on désire faire passer ledit ensemble d'éléments de sa position repliée à sa position déployée ; et

— un mécanisme comportant des moyens élastiques moteurs pour tirer vers l'extérieur dudit ensemble, à travers ledit élément externe, la partie correspondante dudit organe de retenue après action desdits moyens de rupture, est remarquable :

— en ce que ledit mécanisme comporte des moyens élastiques moteurs supplémentaires, dont l'action est de sens opposé à celle desdits moyens élastiques moteurs et est apte à ramener et à maintenir ledit organe de retenue libéré dans une position qui, par rapport audit élément externe et lorsque ledit ensemble est en position au moins partiellement déployée, est au moins sensiblement la même que celle que ledit organe de retenue occupait en position repliée dudit ensemble d'éléments avant action desdits moyens de rupture ; et

— en ce que lesdits moyens élastiques moteurs et lesdits moyens élastiques moteurs supplémentaires sont disposés du côté de la face dudit élément externe dirigée, en position repliée dudit ensemble, vers les autres éléments de ce dernier.

Ainsi, on élimine toute possibilité d'ombre sur les cellules solaires portées par la face extérieure du panneau externe.

Dans un mode de réalisation avantageux, ledit mécanisme comporte une pièce susceptible de coulisser le long dudit organe de retenue, mais maintenue prisonnière entre l'élément externe et l'élément adjacent en position repliée dudit ensemble d'éléments, et lesdits moyens élastiques moteurs et lesdits moyens élastiques moteurs supplémentaires prennent appui sur ladite pièce.

De préférence, lesdits moyens élastiques moteurs sont du type ressort de traction et prennent de plus appui sur l'extrémité interne dudit organe de retenue, tandis que lesdits moyens élastiques moteurs supplémentaires sont du type ressort d'extension et prennent de plus appui sur ledit élément externe. Lesdits moyens élastiques moteurs et lesdits moyens élastiques moteurs supplémentaires peuvent être des ressorts hélicoïdaux traversés par ledit organe de retenue.

De préférence, l'extrémité externe de l'organe de retenue est pourvue d'un élément de butée susceptible de prendre appui sur la face extérieure de l'élément externe et avantageusement réglable.

Comme il ressortira de la description ci-après, pour que le fonctionnement du système selon l'invention soit optimal, il est préférable que :

— la force de traction des moyens élastiques moteurs soit supérieure à la force d'extension des moyens élastiques moteurs supplémentaires ;

— l'action de traction des moyens élastiques moteurs soit rapide par rapport au déploiement desdits éléments ; et

— l'action d'extension des moyens élastiques moteurs supplémentaires soit lente par rapport au déploiement desdits éléments.

Les figures du dessin annexé feront bien comprendre comment l'invention peut être réalisée. Sur ces figures, les références identiques désignent des éléments semblables.

La figure 1 illustre schématiquement, en position repliée, un ensemble de panneaux solaires monté sur un satellite, pourvu du système d'arrimage connu du type concerné par la présente invention.

La figure 2 montre schématiquement, en position déployée, l'ensemble des panneaux solaires de la figure 1.

La figure 3 montre schématiquement, en position déployée et en vue semblable à la figure 2, l'ensemble des panneaux solaires de la figure 1, dans le cas où ledit système d'arrimage connu est remplacé par le système d'arrimage conforme à la présente invention.

La figure 4 représente, en position repliée des panneaux et à plus grande échelle, un exemple de réalisation conformément à l'invention, du système d'arrimage dudit ensemble de panneaux solaires.

La figure 5 illustre, en vue semblable à la figure 4, le début du déploiement desdits panneaux solaires, juste après la rupture de l'organe de retenue.

La figure 6 illustre la position finale dudit organe de retenue par rapport au panneau extérieur dudit ensemble de panneaux.

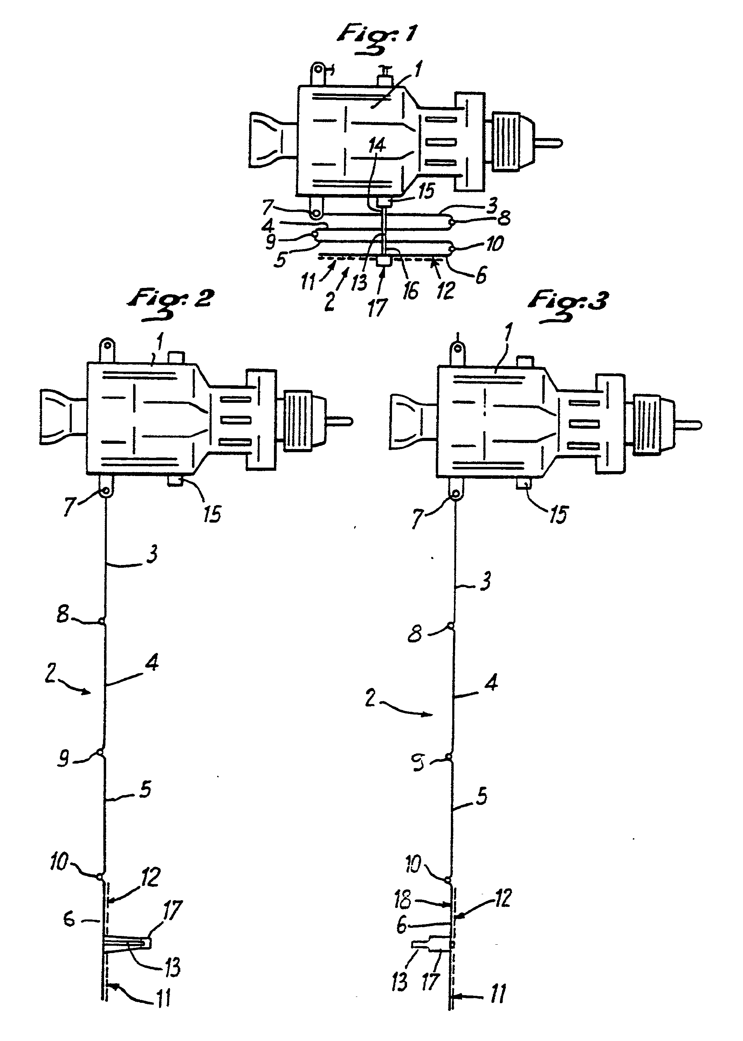

Le satellite artificiel 1 représenté sur la figure 1 est équipé d'au moins un ensemble 2 de panneaux solaires 3, 4, 5 et 6 occupant une position repliée en zig-zag par rapport à la structure du satellite 1 et verrouillés dans cette position au moyen d'un système d'arrimage.

Le panneau interne 3 est lié en rotation, par l'un de ses bords latéraux, à la structure du satellite 1 par une articulation 7, tandis que le bord latéral, opposé au précédent, dudit panneau 3 est lié, par une articulation 8, au panneau adjacent 4. Ce dernier est lié également par une articulation 9, au panneau 5, qui, à son tour, est lié au panneau externe 6 de l'ensemble par une articulation 10.

Les panneaux 3 à 6 forment ainsi, dans la position repliée, un empilement. Chaque panneau porte des cellules solaires, dont seules celles portées par la face extérieure 11 du panneau externe 6 sont schématiquement représentées par des tirets et portent la référence 12.

Bien entendu, le nombre et la forme des panneaux, ainsi que la liaison du premier panneau avec la structure du satellite pourraient être différents ; il en est de même du nombre d'ensembles 2 de panneaux solaires agencés sur le satellite.

Le système de retenue de l'ensemble 2 des panneaux solaires 3 à 6, en position repliée, comporte au moins un organe de retenue 13, traversant lesdits panneaux et relié d'un côté, à son extrémité 14, à des moyens de rupture volontaire 15 fixés à la structure du satellite et, de l'autre côté, à son autre extrémité 16, à la face extérieure 11 du panneau solaire externe 6.

Les moyens de rupture volontaire 15 sont, par exemple, du type pyrotechnique et sont aptes, lorsqu'ils sont actionnés, à désolidariser l'organe de retenue 13 du satellite 1, autorisant ainsi le passage de l'ensemble 2 des panneaux solaires, de la position repliée (figure 1) à la position déployée (figure 2 ou figure 3), par exemple spontanément sous l'action de ressorts incorporés aux articulations 7 à 10 et non spécifiquement représentés.

De façon connue, le système d'arrimage comporte, de plus, un mécanisme 17 à moyens élastiques moteurs pour tirer, à travers le panneau solaire externe 6, l'organe de retenue 13 après action des moyens de rupture pyrotechnique 15, le mécanisme 17 étant lié à l'extrémité 16 de l'organe de retenue 13 et disposé du côté de la face extérieure 11 du panneau externe 6. Grâce à la traction vers l'extérieur de l'organe de retenue 13, qui est par exemple une broche rigide, on évite que ledit organe de retenue 13 détériore les panneaux 3 à 6 lorsque ceux-ci passent de leur position repliée à leur position déployée.

Comme on peut le voir sur les figures 2 et 3, dans la position déployée de l'ensemble 2, les panneaux solaires 3 à 6 sont sensiblement alignés les uns au bout des autres, après l'actionnement des moyens de rupture pyrotechnique 15, lesquels désolidarisent l'organe de retenue 13 de la structure du satellite 1.

Dès ce moment là, le mécanisme 17 à moyens élastiques moteurs, préalablement bandé en position repliée de l'ensemble 2 des panneaux solaires, libère son énergie et se détend pour reprendre son état détendu en tirant l'organe de retenue 13 par l'extrémité 16 vers l'extérieur du panneau externe 6, dans une position éloignée par rapport au satellite. A partir de la rupture de la liaison entre l'organe 13 et le satellite 1, les panneaux solaires 3, 4, 5 et 6 peuvent se déployer autour de leurs articulations respectives, par exemple sous l'action des moyens élastiques incorporés auxdites articulations, pour se disposer sensiblement les uns au bout des autres.

Comme l'illustre schématiquement la figure 2, dans les systèmes d'arrimage connus, lorsque le mécanisme 17 atteint son état détendu, il immobilise l'organe de retenue 13 en regard de la face extérieure 11 du panneau solaire externe 6. Il en résulte donc que ledit organe de retenue 13 et ledit mécanisme 17 font saillie vers l'extérieur par rapport à la face extérieure 11 du panneau externe 6 et portent une ombre sur les cellules solaires 12 montées sur cette face extérieure 11. Le rendement du générateur solaire dont font partie lesdites cellules 12 n'est donc pas optimal.

Pour éviter cet inconvénient, selon l'invention, on prévoit qu'au moins en position finale l'organe de retenue 13 et le mécanisme 17 se trouvent du côté de la face intérieure 18 du panneau externe 6 (voir la figure 3).

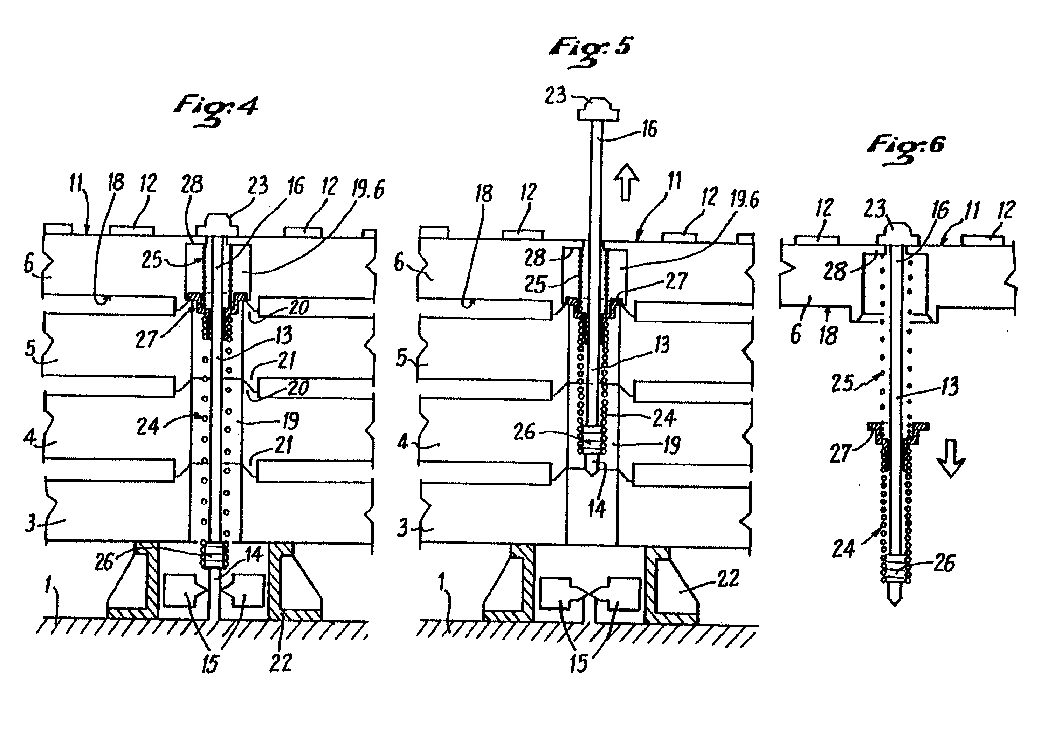

Un exemple de réalisation conforme à l'invention du système d'arrimage de l'ensemble des panneaux solaires est illustré sur les figures 4, 5 et 6. Ces figures correspondent respectivement à une position repliée des panneaux, ceux-ci étant par exemple parallèles à l'axe longitudinal du satellite 1, à une position correspondant au commencement du déploiement des panneaux et à une position déployée des panneaux, ceux-ci étant alors par exemple orthogonaux à l'axe longitudinal du satellite.

Dans cet exemple de réalisation, on retrouve l'organe de retenue 13, tel que par exemple, une tige ou un tirant, dont l'extrémité interne 14 est solidaire de la structure du satellite 1 et est disposée en regard des moyens de rupture 15, par exemple de type, pyrotechnique, également solidaires de la structure du satellite.

Des passages, dont chacun d'eux traverse un panneau 3 à 6, forment par juxtaposition, en position repliée desdits panneaux, un passage continu 19 pour ledit organe de retenue 13 à traverse ceux-ci. Un système de butées coopérantes 20, 21 fixent l'écartement des panneaux de l'empilement ainsi constitué. Une butée 22 solidaire de la structure de satellite 1 sert de support à l'ensemble des panneaux 3 à 6. A l'extrémité externe 16 de l'organe de retenue 13, on prévoit un élément de butée 23 en appui sur la face extérieure 11 du panneau externe 6. On voit ainsi que la coopération de l'organe de retenue 13, des butées 20, 21 et 22 et de l'élément de butée 23 permet de maintenir rigidement, en position repliée des panneaux 3 à 6, non seulement ceux-ci entre eux, mais encore par rapport au satellite 1. A cet effet, il peut être avantageux que l'élément de butée 23 soit constitué par un écrou se vissant sur la tige 13, afin de pouvoir exercer un serrage réglable (éventuellement par l'intermédiaire de rondelles élastiques non représentées) sur l'ensemble replié des panneaux 3 à 6.

Conformément à l'invention, le mécanisme moteur de l'organe de retenue 13 est constitué dans cet exemple de réalisation, de deux ressorts hélicoïdaux 24 et 25.

Le ressort 24 remplit l'office du mécanisme 17 décrit ci-dessus, mais est disposé dans le passage 19, c'est-à-dire du côté de la face intérieure 18 des panneaux externes 6, et non pas du côté de la face extérieure 11 de ce dernier, comme le mécanisme 17. Le ressort 24 entoure l'organe de retenue 13 et une de ses extrémités est rendue solidaire, en 26, de l'extrémité interne 14 de celui-ci, les moyens de rupture 15 se trouvant entre la structure du satellite 1 et ledit point de solidarisation 26. L'autre extrémité du ressort 24 est solidaire d'une coupelle 27 susceptible de coulisser le long de l'organe de retenue 13 et maintenue entre le panneau externe 6 et le panneau 5 adjacent, lorsque ledit ensemble de panneaux 3 à 6 est en position repliée (voir la figure 4). Le ressort 24 est un ressort de traction et en position repliée desdits panneaux, il est tendu.

De même, le ressort 25 entoure l'organe de retenue 13. Son extrémité interne est en appui dans la coupelle 27 et son extrémité externe prend appui sur le panneau externe 6.

Le ressort 25 est logé dans la partie 19.6 du passage 19 disposée dans le panneau 6 et son extrémité externe prend appui sur un épaulement 28 prévu dans cette partie 19.6. Le ressort 25 est un ressort d'extension et en position repliée des panneaux 3 à 6, il est comprimé.

Par ailleurs, les ressorts 24 et 25 sont choisis pour que la force de traction du ressort 24 soit supérieure à la force d'extension du ressort 25.

Lorsque l'on désire obtenir le déploiement des panneaux 3 à 6, on actionne les moyens de rupture 15 qui sectionne l'organe de retenue 13, entre la structure du satellite 1 et le point de solidarisation 26 du ressort de traction 24 sur ledit organe de retenue 13. Par suite, le ressort de traction 24 se détend et tire ledit organe de retenue 13 à traverse les panneaux 3 à 6, de sorte que celui-ci fait saillie à l'extérieur de la face extérieure 11 du panneau externe 6. La face du ressort 24 est choisie pour que la traction de l'organe de retenue 13 soit rapide (voir la figure 5).

Le déploiement des panneaux 3 à 6 peut alors avoir lieu, soit de façon aléatoire, soit de façon synchronisée. On remarquera que tant que les panneaux 6 et 5 restent en contact après rupture de l'organe 13, le ressort 25 reste bandé, puisque la coupelle 27 est maintenue entre ceux-ci. En revanche, dès que les panneaux 5 et 6 sont écartés l'un de l'autre, la coupelle 27 est libérée et le ressort 25 peut se détendre. L'organe de retenue 13 est alors poussé par ledit ressort 25 en sens inverse de la traction à laquelle l'avait soumis la détente du ressort 24 et il reprend, par rapport au panneau externe 6, sa position initiale pour laquelle l'élément de butée 23 est en appui sur la face extérieure 11 du panneau externe 6 (voir la figure 6). La force du ressort 25 est choisie pour que la poussée de l'organe de retenue 13 soit lente par rapport à l'écartement des panneaux 5 et 6, afin que ledit organe n'entre pas au contact dudit panneau 5, au cours du déploiement desdits panneaux 3 à 6.

## Revendications

1. Système d'arrimage, en position repliée, d'un ensemble d'éléments (3 à 6) articulés entre eux, ainsi que sur une structure (1), et pouvant prendre, soit ladite position repliée dans laquelle lesdits éléments sont superposés, soit une position déployée dans laquelle lesdits éléments sont au moins sensiblement alignés les uns au bout des autres, ledit système comportant :
— au moins un organe de retenue (13) traversant lesdits éléments (3 à 6) en position repliée dudit ensemble et relié, d'un côté, à ladite structure (1) et en appui, de l'autre côté, sur l'élément externe (6) dudit ensemble ;
— des moyens (15) pour rompre volontairement soit ledit organe de retenue (13), soit sa liaison à ladite structure (1), lorsque l'on désire faire passer ledit ensemble d'éléments de sa position repliée à sa position déployée ; et
— un mécanisme comportant des moyens élastiques moteurs (24) pour tirer vers l'extérieur dudit ensemble, à travers ledit élément externe, la partie correspondante dudit organe de retenue (13) après action desdits moyens de rupture (15), caractérisé :
— en ce que ledit mécanisme comporte des moyens élastiques moteurs supplémentaires (25), dont l'action est de sens opposé à celle desdits moyens élastiques moteurs (24) et est apte à ramener et à maintenir ledit organe de retenue (13) libéré dans une position qui, par rapport audit élément externe (6) et lorsque ledit ensemble est en position au moins partiellement déployée, est au moins sensiblement la même que celle que ledit organe de retenue (13) occupait en position repliée dudit ensemble d'éléments avant action desdits moyens de rupture ; et
— en ce que lesdits moyens élastiques moteurs (24) et lesdits moyens élastiques moteurs supplémentaires (25) sont disposés du côté de la face (18) dudit élément externe (6) dirigée, en position repliée dudit ensemble, vers les autres éléments de celui-ci.

2. Système d'arrimage selon la revendication 1, caractérisé en ce que ledit mécanisme comporte une pièce (27) susceptible de coulisser le long dudit organe de retenue (13), mais maintenue prisonnière entre l'élément externe (6) et l'élément adjacent (5) en position repliée dudit ensemble d'éléments, et en ce que lesdits moyens élastiques moteurs et lesdits moyens élastiques moteurs supplémentaires prennent appui sur ladite pièce (27).

3. Système d'arrimage selon la revendication 2, caractérisé en ce que lesdits moyens élastiques moteurs (24) sont du type ressort de traction et prennent de plus appui (en 26) sur l'extrémité interne (14) dudit organe de retenue (13), tandis que lesdits moyens élastiques moteurs supplémentaires (25) sont du type ressort d'extension et prennent de plus appui (en 28) sur ledit élément externe (6).

4. Système selon l'une des revendications 2 ou 3, caractérisé en ce que lesdits moyens élastiques moteurs et lesdits moyens élastiques moteurs supplémentaires sont des ressorts hélicoïdaux (24, 25) traversés par ledit organe de retenue (13).

5. Système selon l'une des revendications 1 à 4, caractérisé en ce que l'extrémité externe (16) de l'organe de retenue (13) est pourvu d'un élément de butée (23) susceptible de prendre appui sur la face extérieure (11) de l'élément externe (6).

6. Système selon l'une des revendications 1 à 5, caractérisé en ce que ledit élément de butée (23) est réglable.

7. Système selon l'une des revendications 3 à 6, caractérisé en ce que la force de traction des moyens élastiques moteurs (24) est supérieure à la force d'extension des moyens élastiques moteurs supplémentaires (25).

8. Système selon l'une des revendications 3 à 7, caractérisé en ce que l'action de traction des moyens élastiques moteurs (24) est rapide par rapport au déploiement desdits éléments.

9. Système selon l'une des revendications 3 à 8, caractérisé en ce que l'action d'extension des moyens élastiques moteurs supplémentaires (25) est lente par rapport au déploiement desdits éléments.

10. Système selon l'une des revendications 1 à 9, caractérisé en ce qu'il est mis en oeuvre pour l'arrimage des panneaux solaires d'un générateur photovoltaïque.

## Patentansprüche

1. Niederhalter-System mit in eingezogener Stellung eines Satzes von untereinander sowie an einem Aufbau (1) angelenkten Elementen (3 bis 6), die entweder die eingezogene Stellung, in der die Elemente übereinander liegen, oder die ausgefahrene Stellung einnehmen können, in der sie zumindest allgemein endweise zueinander ausgerichtet sind, bestehend aus :
zumidnest einem Rückhalteorgan (13), das durch die in eingezogener Stellung befindlichen Elemente (3 bis 6) des Satzes hindurchläuft und auf der einen Seite mit dem Aufbau (1) verbunden ist sowie auf der anderen Seite an das äußere Element (6) des Satzes zur Anlage kommt,
einer Einrichtung (15) zum willkürlichen Trennen entweder des Rückhalteorgans (13) oder der Verbindung zum Aufbau (1) bei beabsichtigter Überführung des Satzes der Elemente von der eingezogenen zur ausgefahrenen Stellung und einem Mechanismus bestehend aus elastischen Antriebsmitteln (24), um über das äußere Element den entsprechenden Teil des Rückhalteorgans (13) nach Tätigwerden der Trennungseinrichtung (15) außerhalb des Satzes zu ziehen,
dadurch **gekennzeichnet**, daß der Mechanismus zusätzliche elastische Antriebsmittel (25) von gegenüber den elastischen Antriebsmitteln (24) entgegengesetzter Wirkungsweise aufweist und dazu in der Lage ist, das Rückhalteorgan (13) zurückzuführen und zu halten, das in einer Stellung freigemacht wurde, die gegenüber dem äußeren Element (6) und bei zumindest teilweise ausgefahrener Stellung des Satzes zumindest allgemein dieselbe ist wie die, die das Rückhalteorgan (13) in eingezogener Stellung des Satzes der Elemente vor dem Tätigwerden der Trennungseinrichtung eingenommen hatte, und daß die elastischen Antriebsmittel (24) sowie die zusätzlichen elastischen Antriebsmittel (25) auf der Seite der Fläche (18) des äußeren Elementes (6) angeordnet sind, die in eingefahrener Stellung des Satzes zu dessen anderen Elementen hin gerichtet ist.

2. Niederhalter-System nach Anspruch 1, dadurch **gekennzeichnet**, daß der Mechanismus ein Teil (27) aufweist, das längs des Rückhalteorgans (13) gleitbar und dabei jedoch zwischen dem äußeren Element (6) und dem nächstliegenden Element (5) in eingefahrener Stellung des Satzes der Elemente eingeschlossen gehalten wird, und daß die elastischen Antriebsmittel sowie die zusätzlichen elastischen Antriebsmittel am Teil (27) zur Anlage kommen.

3. Niederhalter-System nach Anspruch 2, dadurch **gekennzeichnet**, daß die elastischen Antriebsmittel (24) als Zugfeder ausgeführt sind und darüber hinaus (bei 26) am inneren auslaufenden Ende (14) des Rückhalteorgans (13) zur Anlage kommen, wogegen die zusätzlichen elastischen Antriebsmittel (25) als Dehnungsfeder ausgeführt sind und (bei 28) am äußeren Element (6) zur Anlage kommen.

4. Niederhalter-System nach einem der vorhergehenden Ansprüche 2 oder 3, dadurch **gekennzeichnet**, daß die elastischen Antriebsmittel und die zusätzlichen elastischen Antriebsmittel zylindrische Schraubenfedern (24, 25) sind, die von dem Rückhalteorgan (13) durchlaufen werden.

5. Niederhalter-System nach einem der vorhergehenden Ansprüche 1 bis 4, dadurch **gekennzeichnet**, daß das auslaufende äußere Ende (16) des Rückhalteorgans (13) mit einem Anschlagteil (23) versehen ist, so daß es an der äußeren Fläche (11) des äußeren Elementes (6) zum Anschlag kommen kann.

6. Niederhalter-System nach einem der vorhergehenden Ansprüche 1 bis 5, dadurch **gekennzeichnet**, daß das Anschlagteil (23) einstellbar ist.

7. Niederhalter-System nach einem der vorhergehenden Ansprüche 3 bis 6, dadurch **gekennzeichnet**, daß die Zugkraft der elastischen Antriebsmittel (24) größer ist als die Dehnungskraft der zusätzlichen elastischen Antriebsmittel (25).

8. Niederhalter-System nach einem der vorhergehenden Ansprüche 3 bis 7, dadurch **gekennzeichnet**, daß die Zugkraft der elastischen Antriebsmittel (24) gegenüber dem Ausfahren der Elemente schnellwirkend ist.

9. Niederhalter-System nach einem der vorhergehenden Ansprüche 3 bis 8, dadurch **gekennzeichnet**, daß die Dehnungskraft der zusätzlichen elastischen Antriebsmittel (25) gegenüber dem Ausfahren der Elemente langsamwirkend ist.

10. Niederhalter-System nach einem der vorhergehenden Ansprüche 1 bis 9, dadurch **gekennzeichnet**, daß es eingesetzt wird zum Verstauen und Unterbringen von Solarzellenpanelen eines Photovoltaik-Generators.

## Claims

1. System for securing, in folded position, an assembly of articulated elements (3 to 6) on one another and on a structure (1), and adapted to take either said folded position in which said elements are superposed, or a deployed position in which said elements are at least substantially aligned end to end, said system comprising :
— at least one retaining member (13) passing through said elements (3 to 6) in folded position of said assembly and connected, on one side, to said structure (1) and in abutment, on the other side, on the outer element (6) of said assembly ;
— means (15) for voluntarily breaking either said retaining member (13) or its connection to said structure (1), when it is desired to pass said assembly of elements from its folded position to its deployed position ; and
— a mechanism comprising elastic drive means (24) for drawing, outwardly of said assembly, through said outer element, the corresponding part of said retaining member (13) after action of said breaking means (15), characterized in that :
— said mechanism comprises additional elastic drive means (25), of which the action is of opposite direction to that of said elastic drive means (24) and is adapted to return and maintain said released retaining member (13) in a position which, with respect to said outer element (6) and when said assembly is at least in partially deployed position, is at least substantially the same as the one which said retaining member (13) occupied in folded position of said assembly of elements before action of said breaking means ; and in that :
— said elastic drive means (24) and said additional elastic drive means (25) are disposed towards the face (18) of said outer element (6) directed, in folded position of said assembly, towards the other elements of the latter.

2. System according to claim 1, characterized in that said mechanism comprises a piece (27) adapted to slide along said retaining member (13), but maintained captive between the outer element (6) and the adjacent element (5) in folded position of said assembly of elements, and in that said elastic drive means and said additional elastic drive means abut on said piece (27).

3. System according to claim 2, characterized in that said elastic drive means (24) are of the draw spring type and in addition abut (in 26) on the inner end (14) of said retaining member (13), whilst said additional elastic drive means (25) are of the extension spring type and in addition abut (in 28) on said outer element (6).

4. System according to one of claims 2 or 3, characterized in that said elastic drive means and said additional elastic drive means are helical springs (24, 25) traversed by said retaining member (13).

5. System according to anyone of claims 1 to 4, characterized in that the outer end (16) of the retaining member (13) is provided with a stop element (23) adapted to abut on the outer face (11) of the outer element (6).

6. System according to anyone of claims 1 to 5, characterized in that said stop element (23) is adjustable.

7. System according to anyone of claims 3 to 6, characterized in that the force of traction of the elastic drive means (24) is greater than the force of extension of the additional elastic drive means (25).

8. System according to anyone of claims 3 to 7, characterized in that the action of traction of the elastic drive means (24) is rapid with respect to the deployment of said elements.

9. System according to anyone of claims 3 to 8, characterized in that the action of extension of the additional elastic drive means (25) is slow with respect to the deployment of said elements.

10. System according to anyone of claims 1 to 9, characterized in that it is employed for securing solar panels of a photovoltaic generator.

*Fig. 1*

*Fig. 2*

*Fig. 3*

Fig.6

Fig.5

Fig.4